# EUROPÄISCHE PATENTSCHRIFT

(11) **EP 0 615 981 B1**
(45) Veröffentlichungstag und Bekanntmachung des Hinweises auf die Patenterteilung: **06.05.1998**
(21) Anmeldenummer: 94101797.2
(22) Anmeldetag: 07.02.1994
(51) Int. Cl.: C08F 4/02, C08F 4/622, C08F 10/00

(54) **Geträgertes Katalysatorsystem, seine Herstellung und seine Verwendung zur Polymerisation von Olefinen**
Supported catalyst system, its preparation and its use in olefin polymerisation
Système catalytique sur support, sa préparation et son utilisation pour la polymérisation d'oléfines

(30) Priorität: 12.02.1993 DE 4304286
(43) Veröffentlichungstag der Anmeldung: 21.09.1994
(73) Patentinhaber: TARGOR GmbH, 55116 Mainz (DE)
(72) Erfinder: Brekner, Michael-Joachim, Dr., D-60529 Frankfurt (DE); Bachmann, Bernd, Dr., D-65817 Eppstein/Taunus (DE); Osan, Frank, Dr., D-65779 Kelkheim (DE); Alberti, Klaus, Dr., D-65510 Idstein (DE); Winter, Andreas, Dr., D-61479 Glashütten/Taunus (DE)

(56) Entgegenhaltungen:
- EP-A- 0 447 070
- EP-A- 0 523 416
- EP-A- 0 553 757
- EP-A- 0 557 718
- EP-A- 0 563 917
- EP-A- 0 578 838
- GB-A- 1 530 445
- JOURNAL OF POLYMER SCIENCE, POLYMER CHEMISTRY EDITION Bd. 29, Nr. 11 , Oktober 1991 , NEW YORK US Seiten 1609 - 1613 XP000238173 J.C.W. CHIEN ET AL. 'olefin copolymerization with metallocene catalysts. IV. metallocene/methylalumin- oxane catalyzed olefin terpolymerization'

## Beschreibung

Die vorliegende Erfindung betrifft ein geträgertes (heterogenes) Katalysatorsystem, seine Herstellung unter Einsatz von Mikrowellen und seine Verwendung zur Polymerisation von Olefinen.

Aus EP-A-553 757 ist ein Katalysatorsystem zur Olefinpolymerisation oder Copolymerisation, bestehend aus mindestens einem Metallocen als Übergangsmetallverbindung und mindestens einer Aluminoxanverbindung, bekannt. In Gegenwart des Katalysatorsystems wird bei einer Temperatur von -60 bis 200°C bei einem Druck von 0,5 bis 100 bar in Lösung, in Suspension oder in der Gasphase ein Olefinpolymer hergestellt.

Aus EP-A-557 718 ist ein Katalysator für die Olefinpolymerisation bekannt, der aus dem Reaktionsprodukt eines in aliphatischen und aromatischen Kohlenwasserstoffen unlöslichen Aluminoxan mit mindestens einem Metallocen besteht.

Aus EP-A-563 917 ist ein geträgerter Polymerisationskatalysator bekannt, der herstellbar ist durch Umsetzung des Reaktionsproduktes, gebildet aus einem Aluminoxan und mindestens einem Metallocen mit einem mikroporösen polymeren Träger.

Aus EP-A-578 838 ist ein geträgertes Polymerisations-Katalysatorsystem bekannt, bestehend aus dem Reaktionsprodukt einer geträgerten Organoaluminium-Verbindung und einer Metallocen-Katalysatorkomponente. Auf diese Weise geträgerte Katalysatorsysteme können in Polymerisationsverfahren zur Herstellung von Polyethylen, Polypropylen oder Cycloolefincopolymeren eingesetzt werden.

Aus GB-A-1 530 445 ist die Verwendung von Mikrowellenstrahlung zur Fixierung eines Ziegler-Katalysators auf einen Träger bekannt.

Unter technisch relevanten Polymerisationsbedingungen ist jedoch die Standzeit derart erzeugter geträgerter Metallocen-Katalysatorsysteme, d.h. der Zeitraum, in dem die Katalysatorsysteme ohne einen signifikanten Rückgang ihrer Aktivität eingesetzt werden können, verbesserungswürdig. Zudem ist eine bessere Fixierung des Metallocens wünschenswert, da sich unter den Polymerisationsbedingungen einer Olefinpolymerisation bei einer schlechten Fixierung des geträgerten Katalysatorsystems durch vom Trägermaterial abgelöste Katalysatorpartikel Beläge an den Reaktorwänden bilden können. Derartige Beläge in den Reaktorsystemen müssen regelmäßig entfernt werden, da diese den Kühlaustausch zum Kühlmedium verhindern.

Darüber hinaus können sich unter den technisch relevanten Polymerisationsbedingungen bei den gebildeten Polymeren ungünstige Kornmorphologien, d.h. relativ kleine Korndurchmesser der Polymerpartikel, ausbilden. Relativ große Korndurchmesser (>100µm) mit einer möglichst einheitlichen Größenverteilung sind jedoch im Hinblick auf einen einfachen Polymeraustrag aus dem Reaktor und für eine daran anschließende bequeme Handhabung des Polymers wünschenswert.

Bei der Herstellung von hoch reinen und/oder hoch transparenten Polyolefinen wie z. B. den Cycloolefincopolymeren, die während der Polymerisation weitgehend in Lösung bleiben, hängt die Qualität der Abtrennung des geträgerten Metallocen-Katalysatorsystems von der Polymerlösung durch einen Filtrationsschritt entscheidend von der Stabilität der Fixierung von Cokatalysator und Katalysator auf dem Träger ab. Je besser ein Metallocen oder ein Aluminiumalkyl auf dem Träger fixiert sind, um so geringer ist der Restkatalysator- oder Restcokatalysatorgehalt in der filtrierten Cycloolefincopolymerlösung.

Es bestand die Aufgabe, ein geträgertes Katalysatorsystem mit einer stabileren Katalysator- und/oder Cokatalysatorfixierung und damit mit einer besseren Standzeit bereitzustellen.

Es wurde nun gefunden, daß diese Aufgabe durch ein geträgertes Katalysatorsystem gelöst werden kann, welches einen Träger, mindestens einen Katalysator und mindestens einen Cokatalysator enthält, dadurch gekennzeichnet, daß die Fixierung des Katalysators auf dem Träger unter der Einwirkung von Mikrowellen erfolgt. Dabei wird der Katalysator mit einem geträgerten Katalysator in einem Suspensionsmittel unter Einwirkung von Mikrowellen in Kontakt gebracht.

In einer Ausgestaltung der Erfindung wird der Katalysator mit dem Cokatalysator in Kontakt gebracht, indem das in einem Suspensionsmittel suspendierte, mit dem Cokatalysator belegte Trägermaterial mit einer in einem inerten Lösungsmittel gelösten Katalysator-Verbindung zusammengebracht wird.

In einer anderen Ausgestaltung der Erfindung wird der Katalysator mit dem Cokatalysator in Kontakt gebracht, indem das in einem Suspensionsmittel suspendierte, mit dem Cokatalysator belegte Trägermaterial mit einer in einer festen Form vorliegenden Katalysator-Verbindung zusammengebracht wird.

In einer weiteren Ausgestaltung der Erfindung wird der Katalysator mit dem Cokatalysator in Kontakt gebracht, indem der in einem inerten Lösungsmittel gelöste Katalysator mit dem Feststoff des mit dem Cokatalysator belegten Trägermaterials zusammenbracht wird, so daß eine Suspension entsteht.

Die Herstellung des mit dem Cokatalysator belegten Trägermaterials kann, wie beispielsweise in der europäischen Pataentanmeldung EP-A-578 838 beschrieben, erfolgen. Bereits in diesem ersten Trägerungsschritt ist aber auch eine Mikrowellenbehandlung analog dem hier beschriebenen Vorgehen möglich. Diese Behandlung kann auch unterlassen werden, ohne daß eine merkliche Verschlechterung der Trägerung erkennbar wird, wenn dafür die Mikrowellenbehandlung während der Katalysatorfixierung intensiviert wird.

Das mit dem Cokatalysator belegte Trägermaterial kann als 1 - 40 Gew%-ige, bevorzugt als 5 - 20 Gew%-ige Suspension in einem aliphatischen, inerten Suspensionsmittel wie n-Decan, Hexan, Heptan oder2 Dieselöl eingesetzt werden.

Als Lösungsmittel für den Katalysator kommen inerte Lösungsmittel in Betracht die keine oder nur schwach mikrowellenaktive Banden im Wellenbereich des eingesetzten Mikrowellengerätes (Klystron) aufweisen, beispielsweise Toluol, Hexan, Heptan und Dichlormethan.

Die Umsetzung zwischen Katalysator und geträgertem Cokatalysator kann unter intensivem Mischen der Komponenten, z.B. durch Verrühren bei einem molaren Al/Zr-Verhältnis zwischen 100/1 und 10000/1, bevorzugt zwischen 100/1 und 3000/1, unter inerten Bedingungen, d.h. unter Stickstoff- oder Argonatmosphäre, erfolgen.

Der Katalysator kann zunächst bei einer relativ niedrigen Temperatur zwischen -80°C und + 30°C, bevorzugt bei -10°C bis -40°C, mit dem mit dem Cokatalysator belegten Trägermaterial unter Rühren in Kontakt gebracht werden.
Die durch das Rühren entstehende homogene Suspension kann anschließend bei einer Temperatur zwischen -20° und + 120°C, bevorzugt zwischen 15° und 100°C, mit Mikrowellen bestrahlt werden. Mit der Bestrahlung ist eine Erwärmung der Reaktions-Suspension verbunden. Der Temperaturgradient bis zu einer definierten Endtemperatur, bei der das System über einen variablen Zeitraum gehalten werden kann, wird über die Mikrowellenleistung eingestellt.
Die Bestrahlungsdauer und die damit verbundene Erwärmung ist abhängig von der Mikrowellenleistung und der Substanzmenge. Sie wird beispielsweise so gewählt, daß eine Endtemperatur von 50° - 120°C, bevorzugt 70 - 100°C nicht überschritten wird und diese innerhalb einer Stunde, bevorzugt innerhalb weniger Minuten erreicht wird. Die Umsetzung von Katalysator und geträgertem Cokatalysator erfolgt während der Bestrahlung bei einer Reaktionszeit zwischen 5 und 120 Minuten, bevorzugt 10 - 80 Minuten. Die Mikrowellenapparatur beinhaltet sowohl die Möglichkeit der Bestrahlung von definierten, gerührten Chargen unter Inertgasbedingungen als auch der Bestrahlung von kontinuierlich geförderten Suspensionen.

Die Frequenz der Mikrowellen kann im Bereich von 0,4 GHz bis 24 GHz, bevorzugt 0,4 bis 2,5 GHz und insbesondere bei ca. 433 MHz, ca. 915 MHz und ca. 2,45 GHz liegen. Vorzugsweise wird eine gepulste Mikrowellenstrahlung verwendet.
In Versuchen, bei denen veschiedene Kohlenwasserstoff-Lösungen mit Mikrowellen behandelt wurden, konnte eindeutig nachgewiesen werden, daß im Gegensatz zu reinen Kohlenwasserstoffen beispielsweise Aluminiumalkyle, insbesondere Methylaluminiumalkyl, und Metallocene Mikrowellen absorbieren. Das bedeutet, daß im Falle der Trägerung unter Bestrahlung mit Mikrowellen Energie gezielt auf die zu trägernden Verbindungen übertragen werden kann. Die angeregten zu trägernden Verbindungen verteilen diese Energie in Form von Wärme auch an die Umgebung. Dadurch wird eine gute Fixierung erreicht. Im Trägerungsmedium (Lösungsmittel) kann eine Temperatur gemessen werden, die mit der eingestrahlten und absorbierten Leistung korreliert. Dadurch kann die Temperatur des Mediums zur Beschreibung der Trägerversuche herangezogen werden. Die eingekoppelte Strahlungsleistung hängt auch von den Konzentrationen der anregbaren Komponenten des zu trägernden Katalysatorsystems ab.

Geeignete Trägermaterialien sind beispielsweise Silikagele, Aluminiumoxide, festes Aluminoxan oder andere anorganische Trägermaterialien wie z.B. Magnesiumchlorid oder Oxide, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind.
Ein geeignetes Trägermaterial ist auch ein teilkristallines oder vernetztes, unter Reaktionsbedingungen unlösliches Polyolefinpulver in feinverteilter Form.

Im Laufe der Reaktionszeit zur Herstellung des erfindungsgemäßen geträgerten Katalysatorsystems treten insbesondere bei der Verwendung von Metallocenen mit Absorptionsmaxima im sichtbaren Bereich Veränderungen in der Farbe der Reaktionsmischung auf, an deren Verlauf sich der Fortgang der Reaktion verfolgen läßt.

Die Qualität der Fixierung des Katalysatorsystems läßt sich durch sogenannte Standversuche testen. Dabei können verschiedene Tests angewendet werden. Sehr aussagekräftig sind auch Testpolymerisationen von Propylen. Die geträgerten Katalysatorsysteme werden dabei unter Reaktionsbedingungen gehalten, wobei sie anstatt mit Propylen mit inerten Kohlenwasserstoffen in Berührung kommen. Nach bestimmten Zeiträumen werden dann Katalysatorproben entnommen und einer Testpolymerisation zugeführt. Somit kann eine zeitabhängige Veränderung des Katalysatorsystems festgestellt und bewertet werden.

Nach Ablauf der Reaktionszeit kann die überstehende Lösung z.B. durch Filtration oder Dekantieren abgetrennt werden. Das Filtrat der Reaktionssuspension ist abhängig von dem zuvor eingesetzten Katalysator gefärbt. Der zurückbleibende Feststoff wird 1- bis 5- fach mit einem inerten Suspensionsmittel wie Toluol, n-Decan, Hexan, Dieselöl und Dichlormethan zur Entfernung löslicher Bestandteile im gebildeten geträgerten Katalysatorsystem, insbesondere zur Entfernung von nicht umgesetztem und damit löslichem Metallocen, gewaschen.

Das so hergestellte geträgerte Katalysatorsystem kann z.B. im Vakuum oder im Inertgasstrom getrocknet als Pulver oder noch mit Lösungsmittel behaftet wieder resuspendiert und als Suspension in einem inerten Suspensionsmittel wie z.B. Hexan, Heptan, Dieselöl in das Polymerisationssystem eindosiert werden.

Zur Durchführung einer Polymerisationsreaktion kann vor der Zugabe des erfindungsgemäßen geträgerten Katalysatorsystems in den Reaktorraum zusätzlich mindestens ein Cokatalysator zugegeben werden.

Die erfindungsgemäßen geträgerten Katalysatorsysteme können zur Synthese von Polyolefinen, beispielsweise von Homo- und Copolymeren von Olefinen der Formel Ra-CH=CH-Rb, worin Ra und Rb gleich oder verschieden sind und ein Wasserstoffatom oder einen Kohlenwasserstoffrest mit 1 bis 14 C-Atomen bedeuten, oder Ra und Rb mit den sie verbindenden Atomen einen oder mehrere Ringe bilden können, verwendet werden. Bevorzugt sind Polyethylen und Polypropylen.

Darüber hinaus können die erfindungsgemäßen geträgerten Katalysatorsysteme zur Synthese von Cycloolefincopolymeren herangezogen werden. Besonders bevorzugt sind Cycloolefincopolymere, die man erhält durch Polymerisation von mindestens einem polycyclischen Olefin der Formel I, II, III oder IV, vorzugsweise ein Cycloolefin der Formel I oder III, 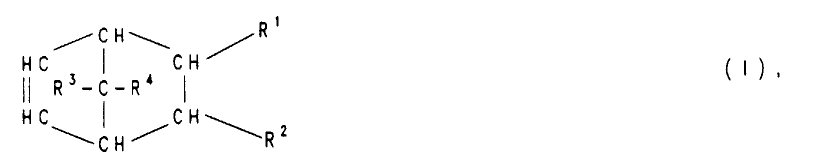 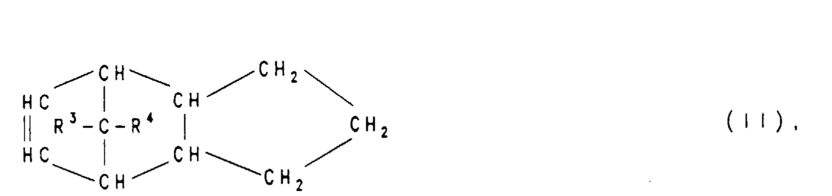 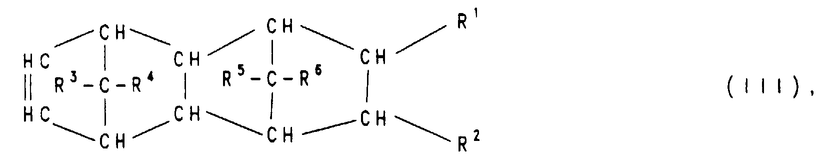 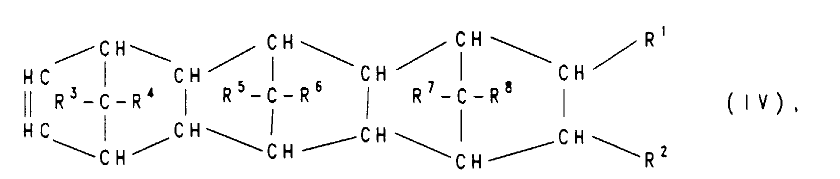 worin R¹, R², R³, R⁴, R⁵, R⁶, R⁷ und R⁸ gleich oder verschieden sind und ein Wasserstoffatom oder einen C₁-C₈-Alkylrest oder einen C₁-C₁₆-Arylrest bedeuten, wobei gleiche Reste in den verschiedenen Formeln eine unterschiedliche Bedeutung haben können,
gegebenenfalls auch einem monocyclischen Olefin der Formel V 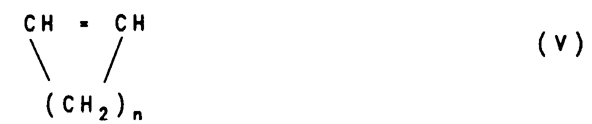 worin n eine Zahl von 2 bis 10 ist, und
einem acyclischen 1-Olefins der Formel VI, 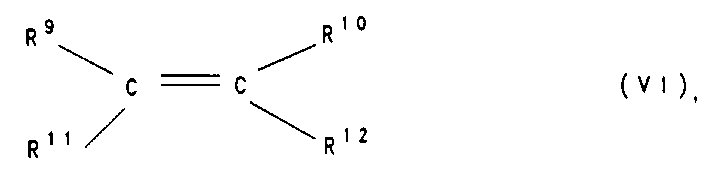 worin R⁹, R¹⁰, R¹¹ und R¹² gleich oder verschieden sind und ein Wasserstoffatom oder einen C₁-C₈-Alkylrest, der auch eine Doppelbindung enthalten kann, oder einen C₆-C₁₆-Arylrest bedeuten.
Bevorzugt sind Ethylen, Propylen, Buten, Hexen, Octen oder Styrol. Besonders bevorzugt ist Ethen. Darüber hinaus können auch Diene eingesetzt werden.

Insbesondere werden Copolymere von polycyclischen Olefinen der Formel I und II hergestellt.

Das polycyclische Olefin (I bis IV) wird in einer Menge von 0,1 bis 99,9 Gew.-%, das monocyclische Olefin (V) in einer Menge von 0 bis 99,9 Gew.-% und das acyclische 1-Olefin (VI) in einer Menge von 0,1 bis 99,9 Gew.-%, jeweils bezogen auf die Gesamtmenge der Monomeren, eingesetzt.

Die Monomeren werden vorzugsweise in folgenden Mengenverhältnissen eingesetzt:
a) das molare Monomerverhältnis polycyclisches Olefin (I bis IV) zu 1-Olefin (VI) beträgt in den entsprechenden Polymeren 1:99 bis 99:1, vorzugsweise 20:80 bis 80:20;
b) bei Polymeren aus polycyclischen Olefinen (I bis IV) und monocyclischen Olefinen (V) beträgt das Molverhältnis polycyclisches Olefin zu monocyclischem Olefin 10:90 bis 90:10;
c) bei Polymeren aus polycyclischen Olefinen (I bis IV), monocyclischen Olefinen (V) und 1-Olefinen (VI) beträgt das molare Monomerverhältnis polycyclisches Olefin zu monocyclischem Olefin zu 1-Olefin 93:5:2 bis 5:93:2 bis 5:5:90, d.h. das Molverhältnis liegt innerhalb eines Mischungsdreiecks, dessen Ecken durch die Molverhältnisse 97:1:2, 5:93:2 und 5:1:94 festgelegt sind;
d) in den Angaben a), b) und c) sind als polycyclische Olefine, monocyclische Olefine und 1-Olefine auch Gemische zweier oder mehrerer Olefine des jeweiligen Typs zu verstehen.

Die erfindungsgemäßen geträgerten Katalysatorsysteme enthalten ein Katalysatorsystem, das mindestens ein Aluminoxan als Cokatalysator und mindestens ein Metallocen als Katalysator enthält.

Das Metallocen ist bevorzugt eine Verbindung der Formel IX, 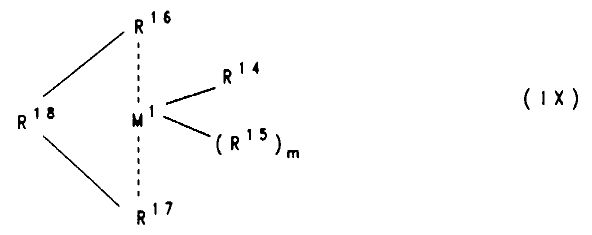 worin
M¹ ein Metall aus der Gruppe Titan, Zirkon, Hafnium, Vanadium, Niob und Tantal, vorzugsweise Zirkon und Hafnium ist,
M² ist Silizium, Germanium oder Zinn, bevorzugt Silizium oder Germanium,
R¹⁴ und R¹⁵ sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor,
m eins oder zwei, je nach Wertigkeit des Zentralatoms M¹ sein kann,
R¹⁶ und R¹⁷ sind gleich oder verschieden und bedeuten einen ein- oder mehrkernigen Kohlenwasserstoffrest, welcher mit dem Zentralatom M¹ eine Sandwichstruktur bilden kann, bevorzugt ist R¹⁶ und R¹⁷ unabhängig voneinander Indenyl, Cyclopentadienyl und Fluorenyl, die mit verschiedenen Kohlenwasserstoffresten substituiert sein können,
R¹⁸ ist eine ein- oder mehrgliedrige Brücke, welche die Reste R¹⁶ und R¹⁷ verknüpft und bedeutet 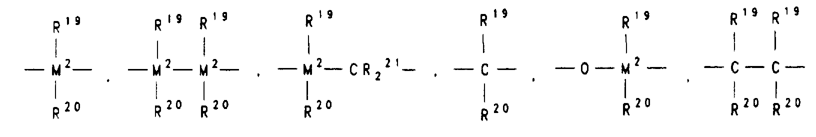 = BR¹⁹, = AlR¹⁹, -Ge-, -Sn-, -O-, -S-, = SO, = SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, vorzugsweise Chlor, eine C₁-C₁₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁹ und R²⁰ oder R¹⁹ und R²¹ bilden jeweils zusammen mit den sie verbindenden Atomen einen Ring,
   R¹⁸ ist vorzugsweise =CR¹⁹R²⁰, =SiR¹⁹R²⁰, =Ger¹⁹R²⁰, -O-, -S-, = SO, =PR¹⁹ oder =P(O)R¹⁹, worin R¹⁹ und R²⁰ bevorzugt eine C₁-C₁₀-, vorzugsweise C₁-C₄-Alkylgruppe oder eine C₆-C₁₀-Arylgruppe ist.

Die Metallocene können, wie in z.B. EP-A-355 682 beschrieben, hergestellt werden.

Bevorzugte Metallocene sind:
Biscyclopentadienylzirkondichlorid
Biscyclopentadienylzirkondimethyl
Biscyclopentadienylzirkondiphenyl
Biscyclopentadienylzirkondibenzyl
Biscyclopentadienylzirkonbistrimethylsilyl
Bis(methylcyclopentadienyl)zirkondichlorid
Bis(1,2-dimethylcyclopentadienyl)zirkondichlorid
Bis(1,3-dimethylcyclopentadienyl)zirkondichlorid
Bis(1,2,4-trimethylcyclopentadienyl)zirkondichlorid
Bis(pentamethylcyclopentadienyl)zirkondichlorid
Bis(ethylcyclopentadienyl)zirkondichlorid
Bis(propylcyclopentadienyl)zirkondichlorid
Bis(butylcyclopentadienyl)zirkondichlorid
Bisfluorenylzirkondichlorid
Bisindenylzirkondichlorid
Diphenylmethylen(9-fluorenyl)(cyclopentadienyl)zirkondichlorid
Diphenylmethylen(9-fluorenyl)(cyclopentadienyl)hafniumdichlorid
Dimethylsilyl-bis-(cyclopentadienyl)-zirkondichlorid
Dimethylsilyl(9-fluorenyl)(cyclopentadienyl)zirkondichlorid
Dimethylsilyl(9-fluorenyl)(cyclopentadienyl)hafniumdichlorid
Isopropyliden(9-fluorenyl)(cyclopentadienyl)zirkondichlorid
Isopropyliden(9-fluorenyl)(cyclopentadienyl)hafniumdichlorid
Dimethylsilyl-bis-(9-fluorenyl)-zirkondichlorid
Dimethylsilyl-bis-1-tetrahydroindenylzirkondichlorid
Dimethylsilyl-bis-1-(2-methyl-tetrahydroindenyl)-zirkondichlorid
Dimethylsilyl-bis-1-(2,3,5-trimethyl-cyclopentadienyl)-zirkondi-chlorid
Dimethylsilyl-bis-1-(2,3-dimethyl-cyclopentadienyl)-zirkondichlo-rid
Dimethylsilyl-bis-1-indenylzirkondichlorid
Dimethylsilyl-bis-1-indenylzirkondimethyl
Dimethylgermyl-bis-1-indenylzirkondichlorid
Dimethylsilyl-bis-1-(2-methyl-indenyl)-zirkondichlorid
Dimethylsilyl-bis-1-(2-methyl-4-isopropylindenyl)-zirkondichlorid
Phenylmethylsilyl-bis-1-(2-methyl-indenyl)-zirkondichlorid
Dimethylsilyl-bis-1-(2-methyl-4-ethylindenyl)-zirkondichlorid
Ethylen-bis-1-(4,7-dimethyl-indenyl)zirkondichlorid
Phenyl(methyl)silyl-bis-1-indenylzirkondichlorid
Phenyl(vinyl)silyl-bis-1-indenylzirkondichlorid
Diphenylsilyl-bis-1-indenylzirkondichlorid
Dimethylsilyl-bis-1-(2-methyl-4-tertiärbutylindenyl)-zirkondichlorid
Methylphenylsilyl-bis-1-(2-methyl-4-isopropylindenyl)-zirkondichlorid
Dimethylsilyl-bis-1-(2-ethyl-4-methylindenyl)zirkondichlorid
Dimethylsilyl-bis-1-(2,4-dimethylindenyl)-zirkondichlorid
Dimethylsilyl-bis-1-(2-methyl-4-ethylindenyl)-zirkondimethyl
Dimethylsilyl-bis-1-(2-methyl-4,6-diisopropylindenyl)-zirkondichlorid
Dimethylsilyl-bis-1-(2,4,6-trimethylindenyl)-zirkondichlorid
Methylphenylsilyl-bis-1-(2-methyl-4,6-diisopropylindenyl)-zirkondichlorid
1,2-Ethandiyl-bis-1-(2-methyl-4,6-diisopropylindenyl)-zirkondichlorid
Dimethylsilyl-bis-1-(2-methyl-4,5-benzoindenyl)-zirkondichlorid
Dimethylsilyl-bis-1-(2-methyl-4-phenylindenyl)-zirkondichlorid
Ethylen-bis-(1-indenyl)-zirkondichlorid
Ethylen-bis-1-(4,5,6,7-tetrahydroindenyl)-zirkondichlorid
Ethylen-bis-(1-indenyl)-hafniumdichlorid
Dimethylsilyl-bis-1-(4,5-benzoindenyl)-zirkondichlorid
Isopropyl-(cyclopentadienyl)(1-indenyl)-zirkondichlorid
Isopropyl-(3-methylcyclopentadienyl)(1-indenyl)-zirkondichlorid
Dimethylsilyl-(cyclopentadienyl)(1-indenyl)-zirkondichlorid
Dimethylsilyl-bis-(3-methylcyclopentadienyl)-zirkondichlorid
Dimethylsilyl-bis-(2,4-dimethylcyclopentadienyl)-zirkondichlorid
Methylethylen-bis-(1-indenyl)-zirkondichlorid
Methyphenylcarbyl(9-fluorenyl)(cyclopentadienyl)zirkondichlorid
Diphenylsilyl(9-fluorenyl)(cyclopentadienyl)zirkondichlorid
Dimethylsilyl(9-(2,7-di-tert.butylfluorenyl))(cyclopentadienyl)-zirkondichlorid
Diphenylcarbyl(9-(2,7-di-tert.butylfluorenyl))(cyclopentadienyl) zirkondichlorid
Isopropyl(9-(2,7-di-tert.butylfluorenyl))(cyclopentadienyl)zirkondichlorid
Isopropyl(9-fluorenyl)(1-(3-methylcyclopentadienyl))zirkondichlorid
Isopropyl(9-fluorenyl)(1-(3-isopropylcyclopentadienyl))zirkondichlorid
Dimethylsily(9-fluorenyl)(1-(3-methylcyclopentadienyl))zirkondichlorid
Dimethylsiyl(9-fluorenyl)(1-(3-isopropylcyclopentadienyl))zirkondichlorid
Isopropyl(9-fluorenyl)(1-indenyl)zirkondichlorid
Dimethylsilyl(9-fluorenyl)(1-indenyl)zirkondichlorid

Chirale Metallocene werden bei der Herstellung des erfindungsgemäßen Katalysatorsystems bevorzugt als Racemat eingesetzt. Verwendet werden kann aber auch die reine R- oder S-Form. Im Falle der Herstellung hochtaktischer Polyolefine sollte davon die meso-Form der Metallocene vor Verwendung abgetrennt werden. Als Zentralatom der Metallocene werden Zirkon und Hafnium bevorzugt, besonders bevorzugt wird Zirkon.

Besonders bevorzugte Metallocene sind:
Biscyclopentadienylzirkondichlorid
Bisindenylzirkondichlorid
Diphenylmethylen(9-fluorenyl)(cyclopentadienyl)zirkondichlorid
Dimethylsilyl-bis-(cyclopentadienyl)-zirkondichlorid
Dimethylsilyl(9-fluorenyl)(cyclopentadienyl)zirkondichlorid
Isopropyliden(9-fluorenyl)(cyclopentadienyl)zirkondichlorid
Dimethylsilyl-bis-1-indenylzirkondichlorid
Diphenylsilyl-bis-1-indenylzirkondichlorid
Ethylen-bis-(1-indenyl)-zirkondichlorid
Isopropyl-(cyclopentadienyl)(1-indenyl)-zirkondichlorid
Isopropyl-(3-methylcyclopentadienyl)(1-indenyl)-zirkondichlorid
Dimethylsilyl-(cyclopentadienyl)(1-indenyl)-zirkondichlorid
Methylphenylcarbyl(9-fluorenyl)(cyclopentadienyl)zirkondichlorid
Isopropyl(9-fluorenyl)(1-(3-methylcyclopentadienyl))zirkondichlorid
Isopropyl(9-fluorenyl)(1-(3-isopropylcyclopentadienyl))-zirkondichlorid

Der Cokatalysator ist bevorzugt ein Aluminoxan das vorzugsweise die Formel VII 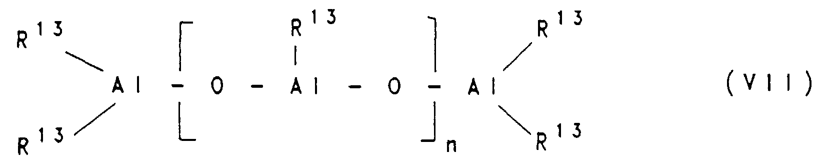 für den linearen Typ und/oder die Formel VIII 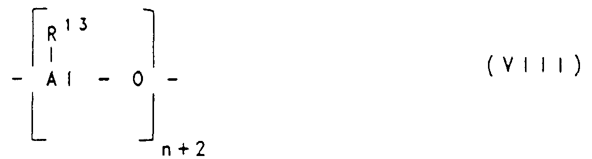 für den cyclischen Typ aufweist, wobei in den Formeln VII und VIII R¹³ eine C₁-C₆-Alkylgruppe, vorzugsweise Methyl, Ethyl oder Isobutyl, Butyl oder Neopentyl, oder Phenyl oder Benzyl, besonders bevorzugt Methyl bedeutet, n ist eine ganze Zahl von 2 bis 50, bevorzugt 5 bis 40. Die exakte Struktur des Aluminoxans ist jedoch nicht bekannt. Das Aluminoxan kann auf verschiedene Art und Weise hergestellt werden, wie z.B. in der europäischen Patentschrift EP-A-355 682 beschrieben.

Die Polymerisation wird in bekannter Weise in Lösung, in Suspension, im flüssigen Cycloolefinmonomer oder Cycloolefinmonomergemisch oder in der Gasphase, kontinuierlich oder diskontinuierlich, ein- oder mehrstufig bei einer Temperatur von -78 bis 150°C, vorzugsweise -20 bis 80°C, durchgeführt. Der Druck beträgt 0,5 bis 64 bar und wird entweder durch die gasförmigen Olefine oder mit Hilfe von Inertgas erhalten.
Die Konzentrationen der eingesetzten Katalysatoren und Cokatalysatoren und die detaillierten experimentellen Bedingungen zur Durchführung der Polymerisatonsreaktion sind beispielsweise in der europäischen Patentanmeldung EP-A-336 128 beschrieben, auf die hiermit ausdrücklich Bezug genommen wird.

Bei den Cycloolefincopolymeren, die fast alle unter den Polymerisationsbedingungen gelöst sind, kann angenommen werden, daß während der Polymerisation mit dem geträgerten Katalysatorsystem das gebildete Polymer direkt in Lösung übergeht und somit nicht das Katalysatorkorn einschließt bzw. die weitere Polymerisation an der Kornoberfläche beeinträchtigt.

Der Vorteil des erfindungsgemäßen Verfahrens gegenüber dem Stand der Technik besteht darin, daß es bei der Fixierung des Katalysators und/oder des Cokatalysators durch die Bestrahlung mit Mikrowellen zu einer gezielten Anregung der Komponenten des Katalysatorsystems kommt, die in einer vorrangigen Erwärmung der reagierenden Komponenten resultiert. Bei der bisher üblichen Energiezufuhr durch Wärme, beispielsweise durch ein Wärmebad, wird jedoch im wesentlichen das Lösungsmittel erwärmt, was zu einer relativ geringen Effektivität des Trägerungsprozesses führt.

Mit Hilfe des erfindungsgemäßen Katalysatorsystems lassen sich beispielsweise sehr reine und sehr transparente Cycloolefincopolymere herstellen, die zu optischen Teilen und Elementen im Bereich der Leistungsoptik, der Lichtleitung und der optischen Informationsspeicherung verarbeitet werden können.

### Beispiele

Für die Versuche mit der geträgerten Aluminiumverbindung (Methylaluminoxan auf Kieselgel), im folgenden "MAO auf SiO₂, Typ A" genannt, wurde eine ca. 10 Gew.-% Suspension in n-Decan hergestellt, welche gemäß Aluminium-Bestimmung 60 mg Al/ml enthielt.

Außerdem wurde ein lösungsmittelfreies geträgertes Methylaluminoxan auf Kieselgel, im folgenden "MAO auf SiO₂, Typ B" genannt hergestellt, das 20% (Gew.) Aluminium im Feststoff enthielt.

Es bedeuten:
- VZ =: Viskositätszahl in cm³/g
- Mw =: Molmassengewichtsmittel in g/mol (ermittelt durch Gelpermeationschromatographie)
- Mw/Mn =: Molmassendispersität
- Schmp. =: Schmelzpunkt in °C (ermittelt mit DSC, 20°C/min Aufheiz-/Abkühlgeschwindigkeit)
- II =: Isotaktischer Index (II = mm + 1/2 mr, ermittelt durch 13C-NMR-Spektroskopie)
- MFI/(230/5) =: Schmelzindex, gemessen nach DIN 53735; in dg/min
- SD =: Polymerschüttdichte in g/dm³.

### Beispiel 1

5,08g "MAO auf SiO₂, Typ B" werden in einem mechanisch rührbaren Gefäß in 60ml Toluol suspendiert und auf -30°C abgekühlt. Gleichzeitig werden 98mg (152 µM) rac-Dimethylsilyl-bis-1-(4,6-isopropyl-2-methylindenyl)-zirkondichlorid in 40ml Toluol gelöst und zur Suspension zugetropft. Das kalte Reaktionsgemisch wird in eine Mikrowellenapparatur eingebracht. Unter Rühren im Inertgasstrom bei einer Mikrowellenfrequenz von 2,45 6Hz und einer Mikrowellenleistung von 500W wird innerhalb von 15min auf 80°C erwärmt, wobei die Suspension eine rote Farbe annimmt. Die Strahlungsleistung wird so geregelt, daß die Suspension für eine Stunde bei dieser Temperatur gehalten wird (250W, getaktet). Anschließend wird filtriert und der rote Feststoff wird dreimal mit 50ml Toluol gewaschen. Die Analyse des gelben Filtrates ergibt einen Zirkongehalt von 0,7 mg (entspricht 5mg rac-Dimethylsilyl-bis-1-(4,6-isopropyl-2-methylindenyl)-zirkondichlorid). Der Feststoff wird im Vakuum getrocknet. Man erhält 4,7g frei fließenden, hellroten, geträgerten Katalysator mit einen Gehalt von 19,8mg Zirkonocen pro Gramm Katalysator.

### Beispiel 2: (Vergleichsbeispiel)

13 ml der Suspension des "MAO auf SiO₂ Typ A" (29 mmol Al) wurde unter Argon in eine G3-Schlenkfritte eingefüllt und mit einer Lösung von 3,3mg rac-Dimethylsilyl-bis-1-(4,6-isopropyl-2-methylindenyl)-zirkondichlorid in 10 ml Toluol (5,1µmol Zr) versetzt. Das Reaktionsgemisch wurde 30 Minuten bei Raumtemperatur gerührt, wobei eine spontane Farbänderung nach rot allmählich verblaßte. Anschließend wurde abfiltriert und der Feststoff 3 mal mit 10 ml Hexan gewaschen. Der geträgerte Katalysator wurde als hexanfeuchter Filterrückstand erhalten.

### Beispiel 3

Die Herstellung des geträgerten Katalysators wird analog Beispiel 1 wiederholt mit dem Unterschied, daß 65mg (0,15 mmol) Isopropyl-(9―fluorenyl)-cyclopentadienyl-zirkondichlorid in 40ml Toluol gelöst und zur Suspension von 3,9g "MAO auf SiO₂, Typ B" in 60ml Toluol zugetropft werden. Die Analyse des hellroten Filtrates ergibt einen Zirkongehalt von 0,9mg (entspricht 4,3mg
Isopropyl-(9-fluorenyl)-cyclopentadienyl-zirkondichlorid). Man erhält 3g frei fließenden, violetten, geträgerten Katalysator mit einen Gehalt von 20mg Zirkonocen pro Gramm Katalysator.

### Beispiel 4 (Vergleichsbeispiel)

20 ml der Suspension des "MAO auf SiO₂ Typ A" (45 mmol Al) wurde unter Argon in eine G3-Schlenkfritte eingefüllt und mit einer Lösung von 4,2mg Isopropyl-(9-fluorenyl)-cyclopentadienyl-zirkondichlorid in 10 ml Toluol (9,7 µmol Zr) versetzt. Das Reaktionsgemisch wurde 30 Minuten bei Raumtemperatur gerührt, wobei eine spontane Farbänderung nach violett allmählich verblaßte. Anschließend wurde abfiltriert und der Feststoff 3 mal mit 10 ml Hexan gewaschen. Der geträgerte Katalysator wurde als hexanfeuchter Filterrückstand erhalten.

### Beispiel 5

0,98g des geträgerten Katalysators, hergestellt gemäß Beispiel 1 wurden in 50 ml Hexan für die Polymerisation resuspendiert.
Polymerisation:
Parallel dazu wurde ein trockener 16-dm³-Reaktor zunächst mit Stickstoff und anschließend mit Propylen gespült und mit 10 dm³ flüssigem Propylen befüllt.
Dann wurden 3 cm³ Triisobutylaluminium (pur, 12 mmol) mit 30 ml Hexan verdünnt, in den Reaktor gegeben und der Ansatz bei 30°C 15 Minuten gerührt.
Anschließend wurde die vorbereitete Katalysator-Suspension in den Reaktor gegeben, durch Wärmezufuhr auf die Polymerisationstemperatur von 70°C aufgeheizt (4°C/min) und das Polymerisationssystem 1 h durch Kühlung bei 70°C gehalten. Bei dem Polymerisationsversuch bleibt die Wärmetönung der Reaktion nach dem Erreichen der Polymerisationstemperatur von 70°C konstant, d.h. es ist kein Aktivitätsabfall und die damit verbundene Änderung der Temperatur im Kühlkreislauf des Reaktors zu verzeichnen. Gestoppt wurde die Polymerisation durch Zusatz von 20 ml Isopropanol. Das überschüssige Monomer wurde abgegast, das Polymer im Vakuum getrocknet. Es resultierten 720g Polypropylen-Pulver. Der Reaktor zeigte keine Beläge an Innenwand oder Rührer.
Die Katalysatoraktivität betrug somit 37kg PP/g Metallocen x h.
VZ = 311 cm³/g; Schmp. = 140°C; MFI 230/5 = 7,5 dg/min;

### Beispiel 6

1,17g von dem Katalysator hergestellt nach Beispiel 1 werden in 50ml Hexan für die Polymerisation resuspendiert.
Die Polymerisation erfolgt analog zu Beispiel 5, wobei abweichend davon die Polymerisation 2 Stunden dauert. Bei dem Polymerisationsversuch bleibt die Wärmetönung der Reaktion nach dem Erreichen der Polymerisationstemperatur von 70°C konstant, d.h. es ist kein Aktivitätsabfall und die damit verbundene Änderung der Temperatur im Kühlkreislauf des Reaktors zu verzeichnen.
Es resultierten 1600g Polypropylen-Pulver. Der Reaktor zeigte keine Beläge an Innenwand oder Rührer.
Die Katalysatoraktivität betrug somit 34,5 kg PP/g Metallocen x h.
VZ = 341 cm³/g; Schmp. = 141 °C; Mw = 330000 g/mol; Mw/Mn = 2,8; MFI 230/5 = 5,5 dg/min; SD = 350 g/dm³

### Beispiel 7

0,58g von dem Katalysator hergestellt gemäß Beispiel 1 werden in 50ml Hexan für die Polymerisation resuspendiert.
Die Polymerisation erfolgt analog zu Beispiel 5, wobei abweichend davon die Polymerisation 3 Stunden dauert. Bei dem Polymerisationsversuch bleibt die Wärmetönung der Reaktion nach dem Erreichen der Polymerisationstemperatur von 70°C konstant, d.h. es ist kein Aktivitätsabfall und die damit verbundene Änderung der Temperatur im Kühlkreislauf des Reaktors zu verzeichnen.
Es resultierten 1150g Polypropylen-Pulver. Der Reaktor zeigte keine Beläge an Innenwand oder Rührer.
Die Katalysatoraktivität betrug somit 33kg PP/g Metallocen x h.
VZ = 281 cm³/g; Schmp. = 141°C; MFI 230/5 = 5,5 dg/min;SD = 370 g/dm³

### Beispiel 8 (Vergleichsbeispiel)

Der Katalysator hergestellt gemäß Beispiel 2 wurde in hexanfeuchter Form in 20 ml Hexan resuspendiert.
Die Polymerisation erfolgte analog zu Beispiel 5. Während des Polymerisationsversuchs blieb die Wärmetönung der Reaktion nach dem Erreichen der Polymerisationstemperatur von 70°C nicht konstant, d.h. es ist ein Aktivitätsabfall und die damit verbundene Änderung der Temperatur im Kühlkreislauf des Reaktors zu verzeichnen. Deshalb konnte nur eine mittlere Katalysatoraktivität berechnet werden. Es resultierten 250g sehr feinkörniges Polypropylen-Pulver. Der Reaktor zeigte dünne Beläge an Innenwand und Rührer.
Die (mittlere) Katalysatoraktivität betrug somit 76kg PP/g Metallocen x h.
VZ = 324 cm³/g; Schmp. = 143°C; Mw = 431000 g/mol; Mw/Mn = 2,6; MFI 230/5 = 3,5 dg/min; SD = 110 g/dm³

### Beispiel 9 (Vergleichsbeispiel)

Der Katalysator hergestellt gemäß Beispiel 2 wurde in hexanfeuchter Form in 20 ml Hexan resuspendiert.
Die Polymerisation erfolgte analog zu Beispiel 5, wobei abweichend davon die Polymerisation drei Stunden dauert bei 70°C. Während des Polymerisationsversuchs blieb die Wärmetönung der Reaktion nach dem Erreichen der Polymerisationstemperatur von 70°C nicht konstant, d.h. es ist ein Aktivitätsabfall und die damit verbundene Änderung der Temperatur im Kühlkreislauf des Reaktors zu verzeichnen. Deshalb konnte nur eine mittlere Katalysatoraktivität berechnet werden.
Es resultierten 340g Polypropylen-Pulver. Der Reaktor zeigte in geringem Umfang Beläge an Innenwand und Rührer.
Die (mittlere) Katalysatoraktivität betrug somit 30kg PP/g Metallocen x h.
VZ = 275 cm³/g; Schmp. = 139°C; MFI 230/5 = 6,5 dg/min;

### Beispiel 10

Ein sauberer und trockener 1,5 l Polymerisationsreaktor mit Rührer wurde erst mit Stickstoff und dann mit Ethylen gespült. Der Reaktor wurde mit 600 ml einer toluolischen Norbornenlösung (411 g Norbornen und 86 ml Toluol) gefüllt.
Die Lösung wurde mit 2 ml einer 20 Gew %-igen toluolischen Lösung von Tri(n-butyl)aluminium versetzt. Anschließend wurde die Temperatur im Reaktor auf 70 °C und der Ethylendruck auf 6 bar eingestellt. In einem 25 ml-Schlenkgefäß wurden 210 mg des Katalysatorpulvers hergestellt nach Beispiel 3 in 10 ml trockenem Hexan suspendiert. Diese Suspension wurde über eine Schleuse in den Reaktor gegeben und der Ethylendruck wurde durch Nachdosieren von Ethylen bei 6 bar 60 Minuten konstant gehalten. Die Ethylenaufnahme wurde mittels eines Massenflußmessers der Firma Brooks kontinuierlich verfolgt. Die Ethylenaufnahme betrug über die Dauer der Polymerisation nahezu konstant 9 l/h (Normliter/Stunde).
Die Polymerisation wurde nach 60 Minuten durch Zugabe von 100 ml eines wasserfeuchten (gesättigt bei Raumtemperatur) Toluols gestoppt. Der Reaktorinhalt wurde dann über eine auf 70 °C beheizte 31-Nutsche mit einer eingelegten Filterschicht T5500 der Firma Seitz, bei einem Überdruck in der Nutsche von 2,5 bar innerhalb von 4 Minuten filtriert. Es wurde eine klare Lösung erhalten. Anschließend wurde die Lösung in 5 l Aceton gefällt und mit 3 l Aceton gewaschen. Das ausgefällte Pulver wurde bei 100 °C und 0,2 bar 15 Stunden getrocknet.
Es wurden insgesamt 51,4 g Norbornen-Ethylen-Copolymer erhalten. Die Glastemperatur betrug 154 °C und die Viskositätszahl (Lösungsviskosität) war 180 ml/g.

### Beispiel 11

Es wurde analog zu Beispiel 10 verfahren wobei abweichend davon der gesamte hexanfeuchte Filterrückstand, der bei einer Katalysatorpreparation gemäß Beispiel 4 anfällt, in 10 ml trockenem Hexan resuspendiert wurden dann in die Polymerisation eingesetzt wurden. Die Ethylenaufnahme betrug zu Beginn der Polymerisation 9,3 l/h, fiel jedoch während 60 Minuten merklich ab auf 6,7 l/h.
Die Filtration durchgeführt unter den gleichen Bedingungen wie in Beispiel 9 dauerte 18 Minuten an.
Es wurden 44,6 g Produkt erhalten. Die Glastemperatur betrug 152 °C und die Viskositätszahl war 169 ml/g.

### Beispiel 12 (Standversuch)

1g des getrockneten Katalysators aus Beispiel 3 wird in 50ml Hexan für die Polymerisation suspendiert. Die Polymerisation erfolgt analog zu Beispiel 5. Es resultierten 600g grobkörniges Polypropylen-Pulver. Der Reaktor zeigte keine Beläge an Innenwand oder Rührer. Die Katalysatoraktivität betrug somit 30kg PP/g Metallocen x h.

### Beispiel 13

1g des getrockneten Katalysators aus Beispiel 3 wird in 100ml absolutiertem und mit Inertgas gesättigtem Toluol suspendiert. Unter Schutzgas wird die Suspension für drei Stunden auf 80°C erhitzt. Nach dem Abkühlen auf Raumtemperatur wird durch eine G3-Fritte filtriert. Das Filtrat ist farblos. Der violette Filterrückstand wird mit Hexan gewaschen und anschließend in 50ml Hexan für die Polymerisation suspendiert. Die Polymerisation erfolgt analog zu Beispiel 5. Es resultierten 530g grobkörniges Polypropylen-Pulver. Der Reaktor zeigte keine Beläge an Innenwand oder Rührer. Die Katalysatoraktivität betrug somit 26,5kg PP/g Metallocen x h.

### Beispiel 14 (Vergleichsbeispiel)

Der hexanfeuchte Filterrückstand des Katalysatorsystems hergestellt gemäß Beispiel 4 wird in 50ml Hexan für die Polymerisation suspendiert. Die Polymerisation erfolgt analog zu Beispiel 5. Es resultierten 250g feinkörniges Polypropylen-Pulver. Der Reaktor zeigte Beläge an Innenwand und Rührer. Die Katalysatoraktivität betrug somit 60kg PP/g Metallocen x h.

### Beispiel 15 (Vergleichsbeispiel)

Der hexanfeuchte Filterrückstand des Katalysatorsystems hergestellt gemäß Beispiel 4 wird in 100ml absolutiertem und mit Inertgas gesättigtem Toluol suspendiert. Unter Schutzgas wird die Suspension für drei Stunden auf 80°C erhitzt. Nach dem Abkühlen auf Raumtemperatur wird durch eine G3-Fritte filtriert. Das Filtrat ist rot gefärbt. Der Filterrückstand wird mit Hexan gewaschen und anschließend in 50ml Hexan für die Polymerisation suspendiert. Die Polymerisation erfolgt analog zu Beispiel 5. Es resultierte kein Polypropylen-Pulver.

## Patentansprüche

1. Geträgertes Katalysatorsystem, welches einen Träger, mindestens ein Metallocen als Katalysator und mindestens ein Aluminoxan als Cokatalysator enthält, erhältlich durch Fixierung des Katalysators auf dem Träger unter Einwirkung von Mikrowellen, wobei der Katalysator mit einem geträgerten Cokatalysator in einer Suspensionslösung unter Einwirkung von Mikrowellen in Kontakt gebracht wird.

2. Geträgertes Katalysatorsystem gemäß Anspruch 1,
wobei als Metallocen
Biscyclopentadienylzirkondichlorid
Biscyclopentadienylzirkondimethyl
Biscyclopentadienylzirkondiphenyl
Biscyclopentadienylzirkondibenzyl
Biscyclopentadienylzirkonbistrimethylsilyl
Bis(methylcyclopentadienyl)zirkondichlorid
Bis(1,2-dimethylcyclopentadienyl)zirkondichlorid
Bis(1,3-dimethylcyclopentadienyl)zirkondichlorid
Bis(1,2,4-trimethylcyclopentadienyl)zirkondichlorid
Bis(pentamethylcyclopentadienyl)zirkondichlorid
Bis(ethylcyclopentadienyl)zirkondichlorid
Bis(propylcyclopentadienyl)zirkondichlorid
Bis(butylcyclopentadienyl)zirkondichlorid
Bisfluorenylzirkondichlorid
Bisindenylzirkondichlorid
Diphenylmethylen(9-fluorenyl)(cyclopentadienyl)zirkondichlorid
Diphenylmethylen(9-fluorenyl)(cyclopentadienyl)hafniumdichlorid
Dimethylsilyl-bis-(cyclopentadienyl)-zirkondichlorid
Dimethylsilyl(9-fluorenyl)(cyclopentadienyl)zirkondichlorid
Dimethylsilyl(9-fluorenyl)(cyclopentadienyl)hafniumdichlorid
Isopropyliden(9-fluorenyl)(cyclopentadienyl)zirkondichlorid
Isopropyliden(9-fluorenyl)(cyclopentadienyl)hafniumdichlorid
Dimethylsilyl-bis-(9-fluorenyl)-zirkondichlorid
Dimethylsilyl-bis-1-tetrahydroindenylzirkondichlorid
Dimethylsilyl-bis-1-(2-methyl-tetrahydroindenyl)-zirkondichlorid
Dimethylsilyl-bis-1-(2,3,5-trimethyl-cyclopentadienyl)-zirkondichlorid
Dimethylsilyl-bis-1-(2,3-dimethyl-cyclopentadienyl)-zirkondichlorid
Dimethylsilyl-bis-1-indenylzirkondichlorid
Dimethylsilyl-bis-1-indenylzirkondimethyl
Dimethylgermyl-bis-1-indenylzirkondichlorid
Dimethylsilyl-bis-1-(2-methyl-indenyl)-zirkondichlorid
Dimethylsilyl-bis-1-(2-methyl-4-isopropylindenyl)-zirkondichlorid
Phenylmethylsilyl-bis-1-(2-methyl-indenyl)-zirkondichlorid
Dimethylsilyl-bis-1-(2-methyl-4-ethylindenyl)-zirkondichlorid
Ethylen-bis-1-(4,7-dimethyl-indenyl)-zirkondichlorid
Phenyl(methyl)silyl-bis-1-indenylzirkondichlorid
Phenyl(vinyl)silyl-bis-1-indenylzirkondichlorid
Diphenylsilyl-bis-1-indenylzirkondichlorid
Dimethylsilyl-bis-1-(2-methyl-4-tertiärbutylindenyl)-zirkondichlorid
Methylphenylsilyl-bis-1-(2-methyl-4-isopropylindenyl)-zirkondichlorid
Dimethylsilyl-bis-1-(2-ethyl-4-methylindenyl)-zirkondichlorid
Dimethylsilyl-bis-1-(2,4-dimethylindenyl)-zirkondichlorid
Dimethylsilyl-bis-1-(2-methyl-4-ethylindenyl)-zirkondimethyl
Dimethylsilyl-bis-1-(2-methyl-4,6-diisopropylindenyl)-zirkondichlorid
Dimethylsilyl-bis-1-(2,4,6-trimethylindenyl)-zirkondichlorid
Methylphenylsilyl-bis-1-(2-methyl-4,6-diisopropylindenyl)-zirkondichlorid
1,2-Ethandiyl-bis-1-(2-methyl-4,6-diisopropylindenyl)-zirkondichlorid
Dimethylsilyl-bis-1-(2-methyl-4,5-benzoindenyl)-zirkondichlorid
Dimethylsilyl-bis-1-(2-methyl-4-phenylindenyl)-zirkondichlorid
Ethylen-bis-(1-indenyl)-zirkondichlorid
Ethylen-bis-1-(4,5,6,7-tetrahydroindenyl)-zirkondichlorid
Ethylen-bis-(1-indenyl)-hafniumdichlorid
Dimethylsilyl-bis-1-(4,5-benzoindenyl)-zirkondichlorid
Isopropyl-(cyclopentadienyl)(1-indenyl)-zirkondichlorid
Isopropyl-(3-methylcyclopentadienyl)(1-indenyl)-zirkondichlorid
Dimethylsilyl-(cyclopentadienyl)(1-indenyl)-zirkondichlorid
Dimethylsilyl-bis-(3-methylcyclopentadienyl)-zirkondichlorid
Dimethylsilyl-bis-(2,4-dimethylcyclopentadienyl)-zirkondichlorid
Methylethylen-bis-(1-indenyl)-zirkondichlorid
Methylphenylcarbyl(9-fluorenyl)(cyclopentadienyl)zirkondichlorid
Diphenylsilyl(9-fluorenyl)(cyclopentadienyl)zirkondichlorid
Dimethylsilyl(9-(2,7-di-tert.butylfluorenyl))(cyclopentadienyl)-zirkondichlorid
Diphenylcarbyl(9-(2,7-di-tert.butylfluorenyl))(cyclopentadienyl) zirkondichlorid
Isopropyl(9-(2,7-di-tert.butylfluorenyl))(cyclopentadienyl)zirkondichlorid
Isopropyl(9-fluorenyl)(1-(3-methylcyclopentadienyl))zirkondichlorid
Isopropyl(9-fluorenyl)(1-(3-isopropylcyclopentadienyl))zirkondichlorid
Dimethylsilyl(9-fluorenyl)(1-(3-methylcyclopentadienyl))zirkondichlorid
Dimethylsilyl(9-fluorenyl)(1-(3-isopropylcyclopentadienyl))zirkondichlorid
Isopropyl(9-fluorenyl)(1-indenyl)zirkondichlorid oder
Dimethylsilyl(9-fluorenyl)(1-indenyl)zirkondichlorid
verwendet wird.

3. Geträgertes Katalysatorsystem gemäß Anspruch 1 oder 2, wobei der Cokatalysator ein Aluminoxan der Formel VII 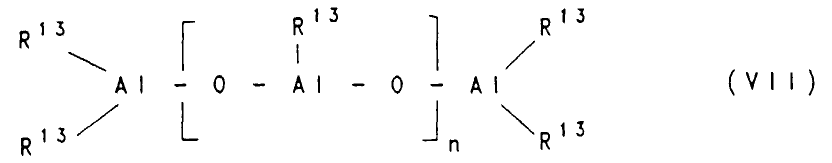 für den linearen Typ und/oder der Formel VIII 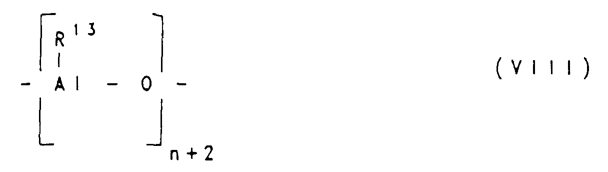 für den cyclischen Typ ist, wobei in den Formeln VII und VIII R¹³ eine C₁-C₆-Alkylgruppe, vorzugsweise Methyl, Ethyl oder Isobutyl, Butyl oder Neopentyl, oder Phenyl oder Benzyl, besonders bevorzugt Methyl bedeutet, n ist eine ganze Zahl von 2 bis 50, bevorzugt 5 bis 40.

4. Verfahren zur Herstellung eines geträgerten Katalysatorsystems, welches einen Träger, mindestens einen Katalysator und mindestens einen Cokatalysator enthält, wobei die Fixierung des Katalysators auf dem Träger unter Einwirkung von Mikrowellen erfolgt und wobei der Katalysator mit einem geträgerten Cokatalysator in einer Suspensionslösung unter Einwirkung von Mikrowellen in Kontakt gebracht wird.

5. Verfahren nach Anspruch 4, wobei auch die Fixierung des Cokatalysators auf das Trägermaterial unter der Einwirkung von Mikrowellen erfolgt.

6. Verfahren nach Anspruch 4, wobei als Suspensionsmittel n-Decan, Hexan, Heptan oder hydriertes Dieselöl eingesetzt werden.

7. Verfahren nach Anspruch 4, wobei als Lösungsmittel für den Katalysator inerte Lösungsmittel, die keine oder nur schwache mikrowellenaktive Banden im Wellenlängenbereich des eingesetzten Mikrowellengerätes aufweisen, wie beispielsweise Toluol, Hexan, Heptan und Dichlormethan verwendet werden.

8. Verfahren nach mindestens einem der Ansprüche 4 bis 7, wobei der Katalysator zunächst bei einer relativ niedrigen Temperatur zwischen -80°C und + 30°C, bevorzugt bei -10°C bis -40°C, mit dem mit dem Cokatalysator belegten Trägermaterial unter Rühren in Kontakt gebracht wird.

9. Verfahren nach Anspruch 8, wobei die durch das Rühren entstehende homogene Suspension anschließend bei einer Temperatur zwischen -20° und +120°C, bevorzugt zwischen 15° bis 100°C, mit Mikrowellen bestrahlt wird.

10. Verfahren nach Anspruch 4, wobei die Frequenz der Mikrowellenstrahlung im Bereich von 0,4 GHz und 24 GHz, bevorzugt 0,4 bis 2,5 GHz und insbesondere bei ca. 433 MHz, ca. 915 MHz und ca. 2,45 GHz liegt.

11. Verfahren nach Anspruch 10, wobei eine gepulste Mikrowellenstrahlung verwendet wird.

12. Verfahren nach Anspruch 4, wobei als Trägermaterial Silikagele, Aluminiumoxide, festes Aluminoxan oder andere anorganische Trägermaterialien, wie z.B. Magnesiumchlorid oder Oxide, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind oder teilkristallines oder vernetztes, unter den Reaktionsbedingungen unlösliches Polyolefinpulver in feinverteilter Form.

13. Verfahren nach Anspruch 9, wobei nach Ablauf der Reaktionszeit die überstehende Lösung z.B. durch Filtration oder Dekantieren abgetrennt wird und der zurückbleibende Feststoff mit einem inerten Suspensionsmittel wie Toluol, n-Decan, Hexan, hydriertes Dieselöl und Dichlormethan gewaschen wird.

14. Verfahren nach Anspruch 13, wobei anschließend der zurückbleibende Feststoff getrocknet als Pulver oder noch mit Lösungsmittel behaftet wieder resuspendiert und als Suspension in einem inerten Suspensionsmittel wie z.B. Hexan, Heptan, hydriertes Dieselöl in ein Polymerisationssystem eindosiert wird.

15. Verwendung des geträgerten Katalysatorsystems nach mindestens einem der Ansprüche 1 bis 3 zur Synthese von Polyolefinen.

16. Verwendung des geträgerten Katalysatorsystems nach Anspruch 15, wobei das Polyolefin hergestellt wird aus mindestens einem polycyclischen Olefin der Formel I, II, III oder IV, 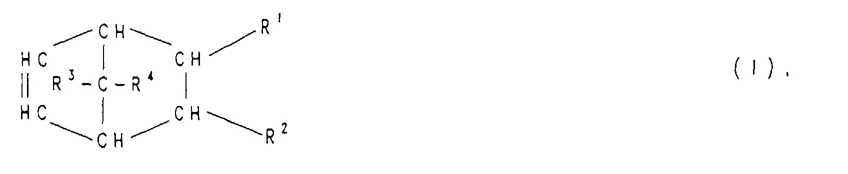 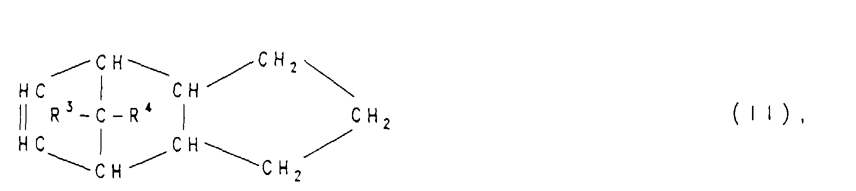 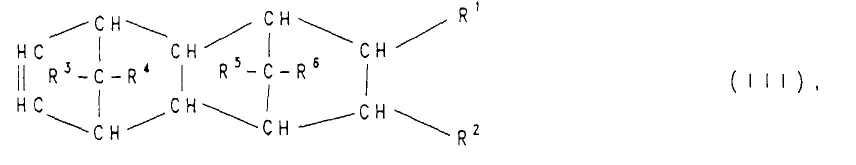 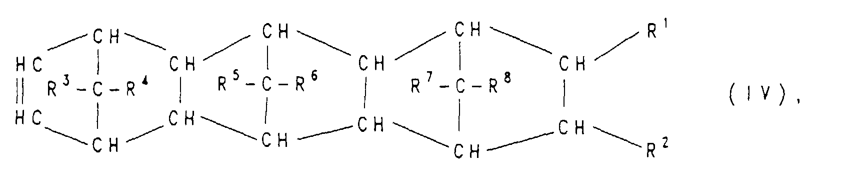 worin R¹, R², R³, R⁴, R⁵, R⁶, R⁷ und R⁸ gleich oder verschieden sind und ein Wasserstoffatom oder einen C₁-C₈-Alkylrest oder einen C₁-C₁₆-Arylrest bedeuten, wobei gleiche Reste in den verschiedenen Formeln eine unterschiedliche Bedeutung haben können,
gegebenenfalls einem monocyclischen Olefin der Formel V 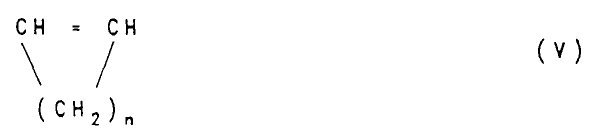 worin n eine Zahl von 2 bis 10 ist, und
einem acyclischen 1-Olefins der Formel VI, 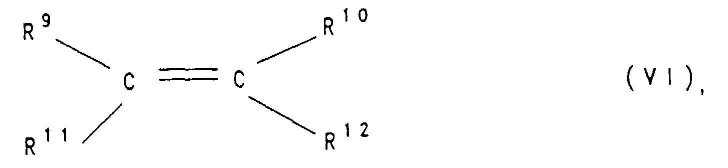 worin R⁹, R¹⁰, R¹¹ und R¹² gleich oder verschieden sind und ein Wasserstoffatom oder einen C₁-C₈-Alkylrest, der auch eine Doppelbindung enthalten kann, oder einen C₆-C₁₆-Arylrest bedeuten.

## Claims

1. A supported catalyst system comprising a support, at least one metallocene as catalyst and at least one aluminoxane as cocatalyst, obtainable by fixing the catalyst to the support under the action of microwaves, where the catalyst is brought into contact with a supported cocatalyst in a suspending medium under the action of microwaves.

2. A supported catalyst system as claimed in claim 1, where the metallocene used is
biscyclopentadienylzirconium dichloride
biscyclopentadienyldimethylzirconium
biscyclopentadienyldiphenylzirconium
biscyclopentadienyldibenzylzirconium
biscyclopentadienylbistrimethylsilylzirconium
bis(methylcyclopentadienyl)zirconium dichloride
bis(1,2-dimethylcyclopentadienyl)zirconium dichloride
bis(1,3-dimethylcyclopentadienyl)zirconium dichloride
bis(1,2,4-trimethylcyclopentadienyl)zirconium dichloride
bis(pentamethylcyclopentadienyl)zirconium dichloride
bis(ethylcyclopentadienyl)zirconium dichloride
bis(propylcyclopentadienyl)zirconium dichloride
bis(butylcyclopentadienyl)zirconium dichloride
bisfluorenylzirconium dichloride
bisindenylzirconium dichloride
diphenylmethylene(9-fluorenyl)(cyclopentadienyl)zirconium dichloride
diphenylmethylene(9-fluorenyl)(cyclopentadienyl)hafnium dichloride
dimethylsilylbis(cyclopentadienyl)zirconium dichloride
dimethylsilyl(9-fluorenyl)(cyclopentadienyl)zirconium dichloride
dimethylsilyl(9-fluorenyl)(cyclopentadienyl)hafnium dichloride
isopropylidene(9-fluorenyl)(cyclopentadienyl)zirconium dichloride
isopropylidene(9-fluorenyl)(cyclopentadienyl)hafnium dichloride
dimethylsilylbis(9-fluorenyl)zirconium dichloride
dimethylsilylbis-1-tetrahydroindenylzirconium dichloride
dimethylsilylbis-1-(2-methyltetrahydroindenyl)zirconium dichloride
dimethylsilylbis-1-(2,3,5-trimethylcyclopentadienyl)zirconium dichloride
dimethylsilylbis-1-(2,3-dimethylcyclopentadienyl)zirconium dichloride
dimethylsilylbis-1-indenylzirconium dichloride
dimethylsilylbis-1-indenyldimethylzirconium
dimethylgermylbis-1-indenylzirconium dichloride
dimethylsilylbis-1-(2-methylindenyl)zirconium dichloride
dimethylsilylbis-1-(2-methyl-4-isopropylindenyl)zirconium dichloride
phenylmethylsilylbis-1-(2-methylindenyl)zirconium dichloride
dimethylsilylbis-1-(2-methyl-4-ethylindenyl)zirconium dichloride
ethylenebis-1-(4,7-dimethylindenyl)zirconium dichloride
phenyl(methyl)silylbis-1-indenylzirconium dichloride
phenyl (vinyl) silylbis-1-indenylzirconium dichloride
diphenylsilylbis-1-indenylzirconium dichloride
dimethylsilylbis-1-(2-methyl-4-tert-butylindenyl)zirconium dichloride
methylphenylsilylbis-1-(2-methyl-4-isopropylindenyl)zirconium dichloride
dimethylsilylbis-1-(2-ethyl-4-methylindenyl)zirconium dichloride
dimethylsilylbis-1-(2,4-dimethylindenyl)zirconium dichloride
dimethylsilylbis-1-(2-methyl-4-ethylindenyl)dimethylzirconium
dimethylsilylbis-1-(2-methyl-4,6-diisopropylindenyl)zirconium dichloride
dimethylsilylbis-1-(2,4,6-trimethylindenyl)zirconium dichloride
methylphenylsilylbis-1-(2-methyl-4,6-diisopropylindenyl)zirconium dichloride
1,2-ethanediylbis-1-(2-methyl-4,6-diisopropylindenyl)zirconium dichloride
dimethylsilylbis-1-(2-methyl-4,5-benzoindenyl)zirconium dichloride
dimethylsilylbis-1-(2-methyl-4-phenylindenyl)zirconium dichloride
ethylenebis(1-indenyl)zirconium dichloride
ethylenebis-1-(4,5,6,7-tetrahydroindenyl)zirconium dichloride
ethylenebis(1-indenyl)hafnium dichloride
dimethylsilylbis-1-(4,5-benzoindenyl)zirconium dichloride
isopropyl(cyclopentadienyl)(1-indenyl)zirconium dichloride
isopropyl(3-methylcyclopentadienyl)(1-indenyl)zirconium dichloride
dimethylsilyl(cyclopentadienyl)(1-indenyl)zirconium dichloride
dimethylsilylbis(3-methylcyclopentadienyl)zirconium dichloride
dimethylsilylbis(2,4-dimethylcyclopentadienyl)zirconium dichloride
methylethylenebis(1-indenyl)zirconium dichloride
methylphenylcarbyl(9-fluorenyl) (cyclopentadienyl)zirconium dichloride
diphenylsilyl(9-fluorenyl)(cyclopentadienyl)zirconium dichloride
dimethylsilyl(9-(2,7-di-tert-butylfluorenyl))(cyclopentadienyl)zirconium dichloride
diphenylcarbyl(9-(2,7-di-tert-butylfluorenyl))(cyclopentadienyl)zirconium dichloride
isopropyl(9-(2,7-di-tert-butylfluorenyl))(cyclopentadienyl)zirconium dichloride
isopropyl(9-fluorenyl) (1-(3-methylcyclopentadienyl))zirconium dichloride
isopropyl(9-fluorenyl)(1-(3-isopropylcyclopentadienyl))zirconium dichloride
dimethylsilyl(9-fluorenyl)(1-(3-methylcyclopentadienyl))zirconium dichloride
dimethylsilyl(9-fluorenyl) (1-(3-isopropylcyclopentadienyl))zirconium dichloride
isopropyl(9-fluorenyl)(1-indenyl)zirconium dichloride or
dimethylsilyl(9-fluorenyl)(1-indenyl)zirconium dichloride.

3. A supported catalyst system as claimed in claim 1 or 2, where the cocatalyst is an aluminoxane of the formula VII 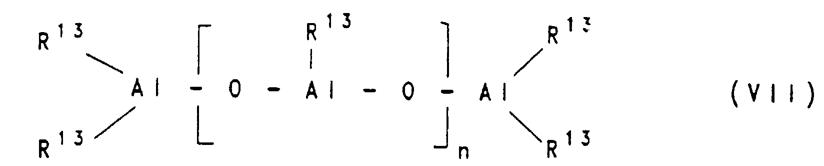 for the linear type and/or of the formula VIII 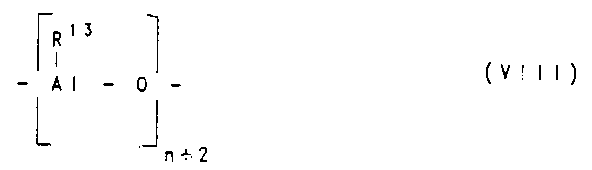 for the cyclic type, where, in the formulae VII and VIII, R¹³ is a C₁-C₆-alkyl group, preferably methyl, ethyl or isobutyl, butyl or neopentyl, or phenyl or benzyl, particularly preferably methyl, and n is an integer from 2 to 50, preferably from 5 to 40.

4. A process for the preparation of a supported catalyst system comprising a support, at least one catalyst and at least one cocatalyst, where the fixing of the catalyst to the support is carried out under the action of microwaves and where the catalyst is brought into contact with a supported cocatalyst in a suspending medium under the action of microwaves.

5. The process as claimed in claim 4, where the fixing of the cocatalyst to the support material is also carried out under the action of microwaves.

6. The process as claimed in claim 4, where the suspending medium employed is n-decane, hexane, heptane or hydrogenated diesel oil.

7. The process as claimed in claim 4, where the solvent for the catalyst is an inert solvent having only weak microwave-active bands, or none at all, in the wavelength range of the microwave unit employed, such as, for example, toluene, hexane, heptane or dichloromethane.

8. The process as claimed in at least one of claims 4 to 7, where the catalyst is first brought into contact with the cocatalyst-coated support material with stirring at a relatively low temperature of between -80°C and +30°C, preferably at from -10°C to -40°C.

9. The process as claimed in claim 8, where the homogeneous suspension formed by stirring is subsequently irradiated with microwaves at a temperature of between -20° and +120°C, preferably between 15° and 100°C.

10. The process as claimed in claim 4, where the frequency of the microwave radiation is in the range from 0.4 GHz to 24 GHz, preferably from 0.4 to 2.5 GHz and in particular is at about 433 MHz, about 915 MHz or about 2.45 GHz.

11. The process as claimed in claim 10, where pulsed microwave radiation is used.

12. The process as claimed in claim 4, where the support material is silica gel, aluminum oxide, solid aluminoxane or another inorganic support material, such as, for example, magnesium chloride or an oxide which has been prepared by flame pyrolysis by combustion of elemental halides in an oxyhydrogen gas flame, or can be prepared as silica gel in certain particle size distributions and particle shapes, or partially crystalline or crosslinked polyolefin powder in finely divided form which is insoluble under the reaction conditions.

13. The process as claimed in claim 9, where, when the reaction time is complete, the supernatant solution is separated off, for example by filtration or decantation, and the solid which remains is washed with an inert suspending medium, such as toluene, n-decane, hexane, hydrogenated diesel oil or dichloromethane.

14. The process as claimed in claim 13, where the solid which remains is subsequently resuspended, either dried as a powder or still containing solvent, and is metered into a polymerization system as a suspension in an inert suspending medium, such as, for example, hexane, heptane or hydrogenated diesel oil.

15. A method of using a supported catalyst system as claimed in at least one of claims 1 to 3 for the synthesis of polyolefins.

16. A method of using a supported catalyst system as claimed in claim 15, where the polyolefin is prepared from at least one polycyclic olefin of the formula I, II, III or IV 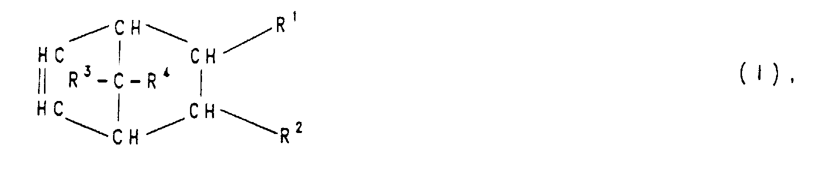 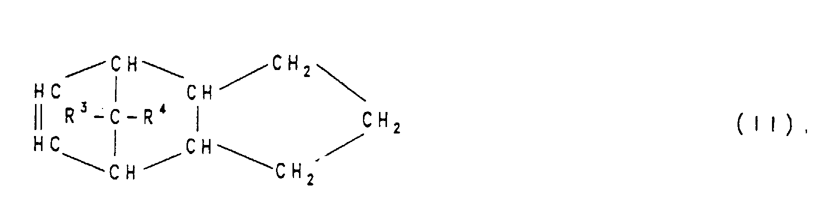 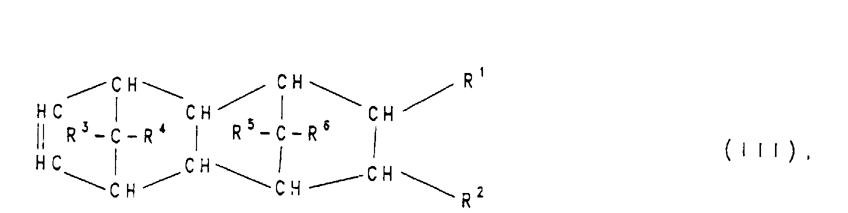 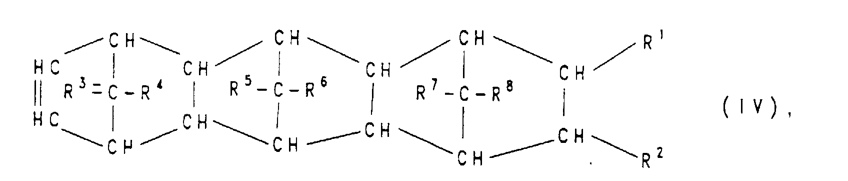 in which R¹, R², R³, R⁴, R⁵, R⁶, R⁷ and R⁸ are identical or different and are a hydrogen atom or a C₁-C₈-alkyl radical or a C₁-C₁₆-aryl radical, where identical radicals in the various formulae can have different meanings,
if desired a monocyclic olefin of the formula V 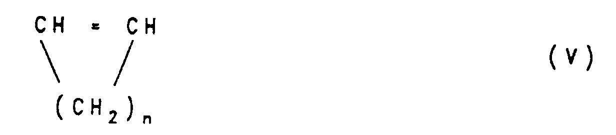 in which n is a number from 2 to 10, and an acyclic 1-olefin of the formula VI 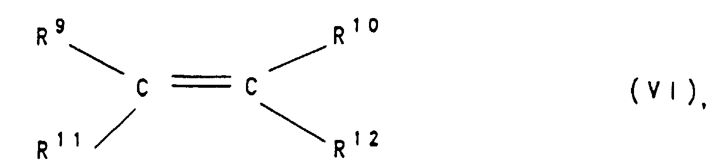 in which R⁹, R¹⁰, R¹¹ and R¹² are identical or different and are a hydrogen atom or a C₁-C₈-alkyl radical, which may also contain a double bond, or a C₆-C₁₆-aryl radical.

## Revendications

1. Système catalytique supporté qui contient un support, au moins un métallocène en tant que catalyseur et au moins un aluminoxane en tant que cocatalyseur, que l'on peut obtenir par fixation du catalyseur sur le support sous l'effet de microondes, le catalyseur étant mis en contact avec un cocatalyseur supporté dans une solution en suspension sous l'effet de microondes.

2. Système catalytique supporté selon la revendication 1, en utilisant en tant que métallocène :
dichlorure de biscyclopentadiénylzirconium,
biscyclopentadiénylzirconiumdiméthyle,
biscyclopentadiénylzirconiumdiphényle,
biscyclopentadiénylzirconiumdibenzyle,
dichlorure de bis(méthylcyclopentadiényl)zirconium,
dichlorure de bis(1,2-diméthylcyclopentadiényl)zirconium,
dichlorure de bis(1,3-diméthylcyclopentadiényl)zirconium,
dichlorure de bis(1,2,4-triméthylcyclopentadiényl)zirconium,
dichlorure de bis(pentaméthylcyclopentadiényl)zirconium,
dichlorure de bis(éthylcyclopentadiényl)zirconium,
dichlorure de bis(propylcyclopentadiényl)zirconium,
dichlorure de bis(butylcyclopentadiényl)zirconium,
dichlorure de bisfluorénylzirconium,
dichlorure de bisindénylzirconium,
dichlorure de diphénylméthylène-(9-fluorényl)(cyclopentadiényl)zirconium,
dichlorure de diphénylméthylène-(9-fluorényl) (cyclopentadiényl)hafnium,
dichlorure de diméthylsilyl-bis(cyclopentadiényl)zirconium,
dichlorure de diméthylsilyl-(9-fluorényl) (cyclopentadiényl)zirconium,
dichlorure de diméthylsilyl-(9-fluorényl) (cyclopentadiényl)hafnium,
dichlorure d'isopropylidène-(9-fluorényl)(cyclopentadiényl)zirconium,
dichlorure d'isopropylidène-(9-fluorényl) (cyclopentadiényl)hafnium,
dichlorure de diméthylsilyl-bis-(9-fluorényl)-zirconium,
dichlorure de diméthylsilyl-bis-1-tétrahydroindénylzirconium,
dichlorure de diméthylsilyl-bis-1-(2-méthyltétrahydroindényl)zirconium,
dichlorure de diméthylsilyl-bis-1-(2,3,5-triméthylcyclopentadiényl)zirconium,
dichlorure de diméthylsilyl-bis-1-(2,3-diméthylcyclopentadiényl)zirconium,
dichlorure de diméthylsilyl-bis-1-indénylzirconium,
diméthylsilyl-bis-1-indénylzirconiumdiméthyl,
dichlorure de diméthylgermyl-bis-1-indénylzirconium,
dichlorure de diméthylsilyl-bis-1-(2-méthylindényl)zirconium,
dichlorure de diméthylsilyl-bis-1-(2-méthyl-4-isopropylindényl)zirconium,
dichlorure de phénylméthylsilyl-bis-1-(2-méthylindényl)zirconium,
dichlorure de diméthylsilyl-bis-1-(2-méthyl-4-éthylindényl)zirconium,
dichlorure d'éthylène-bis-1-(4,7-diméthylindényl)zirconium,
dichlorure de phényl(méthyl)silyl-bis-1-indénylzirconium,
dichlorure de phényl(vinyl)silyl-bis-1-indénylzirconium,
dichlorure de diphénylsilyl-bis-1-indénylzirconium,
dichlorure de diméthylsilyl-bis-1-(2-méthyl-4-tertiobutylindényl)zirconium,
dichlorure de méthylphénylsilyl-bis-1-(2-méthyl-4-isopropylindényl)zirconium,
dichlorure de diméthylsilyl-bis-1-(2-éthyl-4-méthylindényl)zirconium,
dichlorure de diméthylsilyl-bis-1-(2,4-diméthylindényl)zirconium,
diméthylsilyl-bis-1-(2-méthyl-4-éthylindényl)zirconium,
dichlorure de diméthylsilyl-bis-1-(2-méthyl-4,6-diisopropylindényl)zirconiumdiméthyle,
dichlorure de diméthylsilyl-bis-1-(2,4,6-triméthylindényl)zirconium,
dichlorure de méthylphénylsilyl-bis-1-(2-méthyl-4,6-diisopropylindényl)zirconium,
dichlorure de 1,2-éthanediyl-bis-1-(2-méthyl-4,6-diisopropylindényl)zirconium,
dichlorure de diméthylsilyl-bis-1-(2-méthyl-4,5-benzoindényl)zirconium,
dichlorure de diméthylsilyl-bis-1-(2-méthyl-4-phénylindényl)zirconium,
dichlorure d'éthylène-bis-(1-indényl)zirconium,
dichlorure d'éthylène-bis-1-(4,5,6,7-tétrahydroindényl)zirconium,
dichlorure d'éthylène-bis-(1-indényl)hafnium,
dichlorure de diméthylsilyl-bis-1-(4,5-benzoindényl)zirconium,
dichlorure d'isopropyl-(cyclopentadiényl)(1-indényl)zirconium,
dichlorure d'isopropyl-(3-méthylcyclopentadiényl)(1-indényl)zirconium,
dichlorure de diméthylsilyl-(cyclopentadiényl) (1-indényl)zirconium,
dichlorure de diméthylsilyl-bis-(3-méthylcyclopentadiényl)zirconium,
dichlorure de diméthylsilyl-bis-(2,4-diméthylcyclopentadiényl)zirconium,
dichlorure de méthyléthylène-bis-(1-indényl)-zirconium,
dichlorure de méthylphénylcarbyl-(9-fluorényl)(cyclopentadiényl)zirconium,
dichlorure de diphénylsilyl-(9-fluorényl)(cyclopentadiényl)zirconium,
dichlorure de diméthylsilyl-(9-(2,7-di-tertio-butylfluorényl))-(cyclopentadiényl)zirconium,
dichlorure de diphénylcarbyl-(9-(2,7-di-tertio-butylfluorényl))-(cyclopentadiényl)zirconium,
dichlorure d'isopropyl-(9-(2,7-di-tertio-butylfluorényl))-(cyclopentadiényl)zirconium,
dichlorure d'isopropyl-(9-fluorényl)(1-(3-méthylcyclopentadiényl)zirconium,
dichlorure d'isopropyl-(9-fluorényl) (1-(3-isopropylcyclopentadiényl)zirconium,
dichlorure de diméthylsilyl-(9-fluorényl)(1-(3-méthylcyclopentadiényl)zirconium,
dichlorure de diméthylsilyl-(9-fluorényl)(1-(3-isopropylcyclopentadiényl)zirconium,
dichlorure d'isopropyl-(9-fluorényl)(1-indényl)zirconium,
dichlorure de diméthylsilyl-(9-fluorényl)(1-indényl)zirconium.

3. Système catalytique supporté selon la revendication 1 ou 2, où le cocatalyseur est un aluminoxane de formule VII 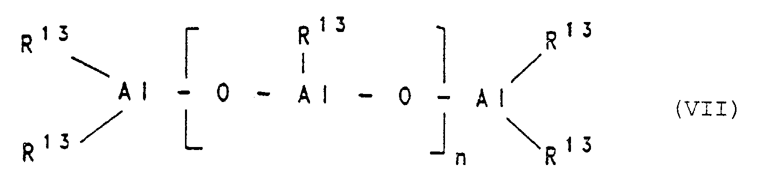 pour le type linéaire, et/ou de formule VIII 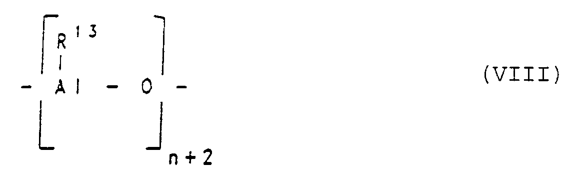 pour le type cyclique, dans les formules VII et VIII, R¹³ étant un groupe alkyle en C₁-C₈, de préférence un groupe méthyle, éthyle ou isobutyle, butyle ou néopentyle, ou phényle ou benzyle, de manière particulièrement préférée méthyle, n est un nombre entier de 2 à 50, de préférence de 5 à 40.

4. Procédé pour la préparation d'un système catalytique supporté qui contient un support, au moins un catalyseur et au moins un cocatalyseur, la fixation du catalyseur sur le support étant effectuée sous l'effet de microondes et le catalyseur étant mis en contact avec un cocatalyseur supporté dans une solution en suspension sous l'effet des microondes.

5. Procédé selon la revendication 4, où la fixation du cocatalyseur sur la matière de support également est effectuée sous l'effet de microondes.

6. Procédé selon la revendication 4, où on utilise en tant que système de suspension le n-décane, l'hexane, l'heptane ou l'huile diesel hydrogénée.

7. Procédé selon la revendication 4, où on utilise en tant que solvants pour le catalyseur, des solvants inertes qui ne présentent pas ou seulement de très faibles bandes actives aux microondes dans le domaine de longueur d'ondes de l'appareil à microondes utilisé, comme par exemple le toluène, l'hexane, l'heptane et le dichlorométhane.

8. Procédé selon au moins l'une des revendications 4 à 7, où on met en contact le catalyseur, en agitant, d'abord à une température relativement faible comprise entre -80 et +30 °C, de préférence de -10 à -40 °C, avec la matière de support couverte de cocatalyseur.

9. Procédé selon la revendication 8, où on irradie ensuite par des microondes la suspension homogène obtenue par agitation ensuite à une température comprise entre -20 °C et +120 °C, de préférence entre 15 °C et 100 °C.

10. Procédé selon la revendication 4, où la fréquence d'irradiation par des microondes est dans l'intervalle de 0,4 GHz et 24 GHz, de préférence de 0,4 à 2,5 GHz et tout particulièrement, d'environ 433 MHz, d'environ 915 MHz et environ 2,45 GHz.

11. Procédé selon la revendication 10, où on utilise une irradiation par des microondes pulsées.

12. Procédé selon la revendication 4, où on prépare en tant que matières de support des silicagels, l'oxyde d'aluminium, l'aluminoxane solide ou d'autres matières de support inorganiques, comme par exemple le chlorure de magnésium ou des oxydes, que l'on prépare par combustion par pyrolyse de flamme d'halogénures élémentaires dans une flamme de mélange détonnant ou en tant que gel de silice ayant une granulométrie déterminée et des formes de grains déterminées, ou la poudre de polyoléfine, finement divisée, partiellement cristalline ou réticulée, insoluble sous conditions réactionnelles.

13. Procédé selon la revendication 9, où après avoir terminé la durée de réaction, la solution surnageante est séparée par exemple par filtration ou par décantation et la matière solide restante est lavée avec un agent de suspension inerte tel que le toluène, le n-décane, l'hexane, l'huile diesel hydrogénée et le dichlorométhane.

14. Procédé selon la revendication 13, où la matière solide obtenue est séchée en tant que poudre ou, comportant encore du solvant, remise en suspension et utilisée en tant que suspension dans un agent de suspension inerte, comme par exemple l'hexane, l'heptane, l'huile diesel hydrogénée, puis ajoutée progressivement au système de polymérisation.

15. Utilisation du système catalytique supporté selon au moins l'une des revendications 1 à 3, pour la synthèse de polyoléfines.

16. Utilisation du système catalytique supporté selon la revendication 15, où on prépare les polyoléfines à partir d'au moins une oléfine polycyclique de formules I, II, III ou IV, 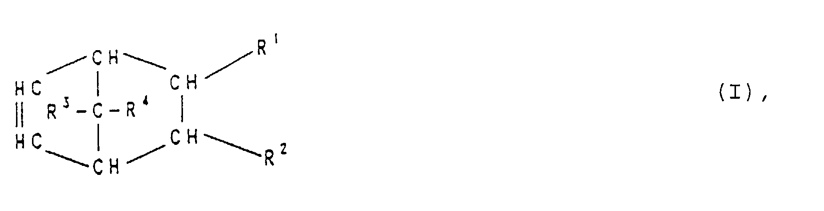 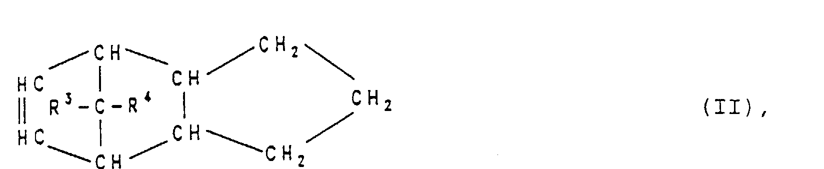 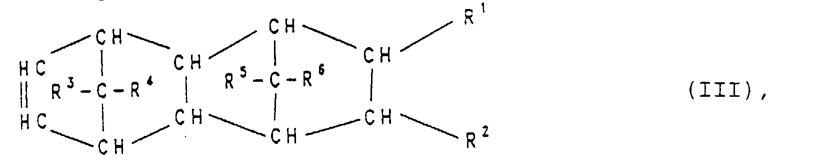 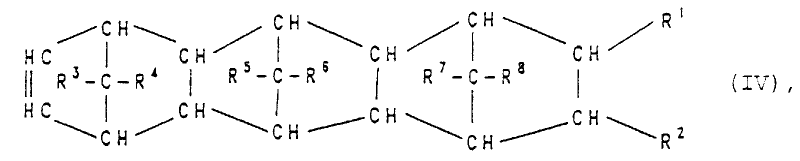 dans lesquelles R¹, R², R³, R⁴, R⁵, R⁶, R⁷ et R⁸ sont identiques ou différents et représentent un atome d'hydrogène ou un reste alkyle en C₁-C₈ ou un reste aryle en C₁-C₁₆, les restes identiques dans les différentes formules pouvant avoir des significations différentes, éventuellement à partir d'une oléfine monocyclique de formule V 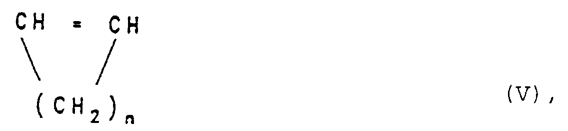 dans laquelle n est un nombre de 2 à 10, et
d'une 1-oléfine acyclique de formule VI, 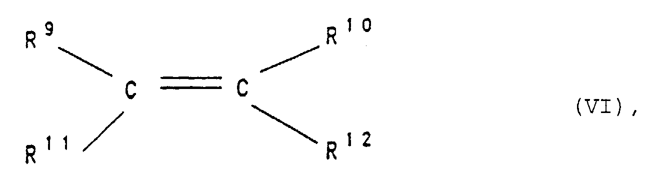 dans laquelle R⁹, R¹⁰, R¹¹ et R¹² sont identiques ou différents et représentent un atome d'hydrogène ou un reste alkyle en C₁-C₈, qui peut comporter également une double liaison, ou un reste aryle en C₆-C₁₆.
